# EUROPEAN PATENT APPLICATION

(11) **EP 4 576 482 A1**
(43) Date of publication of application: **25.06.2025**
(21) Application number: 24222421.0
(22) Date of filing: 20.12.2024
(51) Int. Cl.: H02J 3/28, H02J 15/00, H02J 7/34

(54) **APPARATUS AND METHOD FOR DISTRIBUTING AND STORING ELECTRIC ENERGY**

(30) Priority: 20.12.2023 IT 202300027312
(71) Applicant: Energo Next S.r.l., 33100 Udine (UD) (IT)
(72) Inventor: Petrazzo, Michele, 33050 Gonars (UD) (IT); Cella, Roberto, 33100 Udine (UD) (IT)
(74) Representative: Petraz, Gilberto Luigi

(57) **Abstract**

Apparatus (10) for distributing and storing electric energy, configured to be connected on one side to a renewable sources energy community (11) and on the other side to at least one user device (12a, 12b) that requires energy. The apparatus comprises at least an electrolyser (14) for hydrogen production and at least a fuel cell (15). A control unit (13) control operations of the electrolyser and the fuel cell such that the apparatus (10) exchanges bidirectional power flow with the energy community (11).

## Description

### FIELD OF THE INVENTION

The present invention concerns an apparatus for distributing and storing energy, in particular able to be transported and suitable to be connected on one side to a renewable sources energy community (CER - *Comunità Energetiche Rinnovabili*) and on the other side to one or more user devices that require energy. Such user devices can comprise the energy community itself, to which the apparatus can therefore return energy.

### BACKGROUND OF THE INVENTION

It is known that there is an increasing need to provide alternative energy sources that can supply electrical energy to a plurality of user devices, even of different types, for example in a domestic, commercial or industrial environment, or other. One application can be for example the recharging of vehicles at least partly powered by hydrogen or electrical energy.

In this regard, generators are increasingly being used that allow to produce energy from renewable sources, such as wind devices, solar panels and geothermal type devices, as well as accumulator devices that allow the energy produced to be accumulated and used as needed.

In known solutions, the user devices are connected to an electrical system which is connected to an electrical network, and the generator and/or the accumulator device are connected to the system in parallel. In known solutions, there is no direct interfacing or interaction between generator and user device, or even between different generator/accumulator devices. In known solutions, the transition from power supply through an electrical network to power supply by means of a generator or accumulator device is often manual, which leads to a lack of optimization, technical and economic waste, as well as greater generation and emission of greenhouse gases.

There are also known solutions in which the transition from one or the other energy source occurs automatically, on the basis of data and instructions supplied and defined on a project basis, or in general on the basis of the amount of energy available from the generator or the accumulator device.

When there are generators and/or accumulator devices of different types, known solutions do not allow to take advantage of the characteristics of each of them in a dynamic way, based on the actual conditions of use; on the contrary, their operation remains substantially static and based on pre-set parameters and usage curves.

There are, for example, apparatuses for distributing and storing electrical energy that use, for example, electrolysers, fuel cells and accumulators to produce, store or supply electrical energy to different user devices, including vehicles.

However, these apparatuses prove to be not very efficient and do not allow for an optimal use of the energy stored in them and/or the energy coming from, for example, a renewable sources energy community. Known apparatuses do not provide for example to return energy to the energy community when there is a shortage of energy therein, that is, there is no two-way exchange of energy between the energy community and the storage apparatuses.

There is therefore the need to perfect an apparatus for distributing and storing energy that can overcome at least one of the disadvantages of the state of the art.

One purpose of the present invention is therefore to provide an apparatus for distributing and storing energy that can interface, efficiently and without, or with limited, waste of energy, on one side with a renewable sources energy community, and on the other side with one or more user devices that require energy.

Another purpose of the present invention is to provide an apparatus for distributing and storing energy that is able to return energy to the energy community when there is a lack of energy therein, which therefore provides a two-way exchange of energy with the energy community.

Another purpose of the present invention is an apparatus for distributing and storing energy that allows for a flexible and dynamic use in the delivery and generation of energy, therefore both according to set rules and also as a function of the state of efficiency of its components and environmental conditions.

Another purpose of the present invention is to perfect an effective and simple method for distributing and storing energy.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, an apparatus for distributing and storing energy, according to the present invention, is configured to be connected on one side to a renewable sources energy community, and on the other side to at least one user device that requires energy.

By `energy community' we mean an entity configured to produce, consume, store and sell renewable energy, as well as to exchange, within the same community, the renewable energy produced, as defined by Directive EU2018/2001. Such an energy community can comprise a plurality of generators configured to generate electrical energy from renewable sources, energy accumulator devices, transformer devices suitable to convert energy into different forms and a plurality of user devices.

According to one aspect of the invention, the apparatus comprises at least one electrolyser for producing hydrogen, at least one fuel cell for producing electrical energy, and at least one control unit configured to manage and regulate the operation of the at least one electrolyser and of the at least one fuel cell, wherein the apparatus, by means of the at least one control unit, is configured to exchange energy with the energy community in a two-way manner, that is, receiving energy from the energy community or supplying energy to the energy community. By means of the control unit, the apparatus is configured to assume at least a first stationary condition in which it is connected to the energy community and therefore exchanges energy with it, and at least a mobile condition in which it can be transported and is therefore disconnected from the energy community and can distribute the energy stored within it to one or more user devices. The apparatus is also configured to receive energy when the energy community's generators produce more energy than that required by the energy community itself, and to supply energy to the energy community when the energy required by the latter is greater than that produced.

Advantageously, the present apparatus can interface, efficiently and without - or with limited - energy waste, with the renewable sources energy community on one side and with one or more user devices that require energy on the other side. The apparatus is also able to return energy to the energy community when there is a lack of energy in the latter, therefore it is able to exchange energy with the energy community in a two-way manner.

According to another aspect of the invention, the apparatus comprises one or more hydrogen storage tanks located downstream of the at least one electrolyser. Alternatively or in combination, the tanks can be configured to store hydrogen coming from an external source. The external source is able to transfer hydrogen to the apparatus, by means of a known method or technology, such as a gas pipeline, external tanks or other. This method guarantees the additional possibility of filling the apparatus' internal tanks. These tanks can be provided with a first direct outlet to supply the user device and with a second outlet to power the fuel cell.

According to another aspect of the invention, the apparatus comprises one or more electrical energy storage batteries inserted into corresponding housings, so as to be able to carry out so-called "battery swapping".

According to another aspect of the invention, the apparatus comprises additional energy storage means or devices, such as capacitors or other.

According to another aspect of the invention, the apparatus comprises at least one inverter located downstream of the at least one fuel cell.

According to another aspect of the invention, the control unit is associated with at least one memory where one or more efficiency curves for the at least one electrolyser, the at least one fuel cell or other, are stored.

According to another aspect of the invention, the control unit is associated with a communication system, with known technology, which allows to coordinate the absorbed-stored energy and the produced-distributed energy in a two-way exchange mode with the energy community, in order to optimize the production, surplus and consumption of energy by the energy community, both produced and demanded.

According to another aspect of the invention, the one or more tanks are configured to directly power the at least one user device and/or the fuel cell.

The invention also concerns a method for distributing and storing energy which provides: the production of hydrogen by means of at least one electrolyser and the production of electrical energy by means of at least one fuel cell, wherein the at least one electrolyser and the at least one fuel cell are disposed in an apparatus for storing and distributing energy provided with a control unit configured to manage and regulate the operation of the apparatus; the delivery of the hydrogen and/or the electrical energy to at least one user device; and the connection with a renewable sources energy community, so as to receive energy from the energy community or supply energy to the energy community, based on requirements.

According to another aspect of the invention, in the event that, in a stationary condition, the apparatus is connected to the at least one user device, the at least one control unit is configured, by receiving information also from the energy community, to establish whether surplus energy or insufficient energy is available with respect to the energy community: in case of surplus energy, the at least one control unit manages the user device so that the electrical energy passes directly from the energy community to the at least one user device; in case of insufficient energy, the at least one control unit activates the fuel cell which generates electrical energy to be used by the at least one user device and possibly to supply the energy community.

According to another aspect of the invention, the method provides to send the hydrogen produced by the electrolyser into one or more tanks, from which it can be transferred directly to the at least one user device to be recharged and/or to the fuel cell. The tanks can also receive hydrogen from an external source.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic representation of a distribution and storage apparatus;
- fig. 2 is a block diagram of a mode of operation of the present apparatus.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

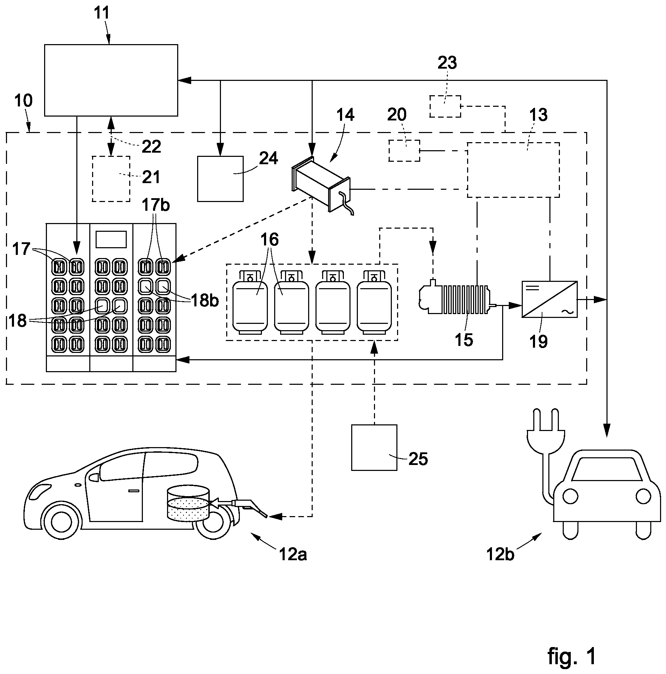

With reference to the attached drawings, see in particular fig. 1, an apparatus 10 for distributing and storing energy is configured to be connected on one side to a renewable sources energy community 11 (CER - *Comunità Energetiche Rinnovabili*)*,* and on the other side to at least one user device 12a, 12b that requires energy.

The apparatus 10 comprises at least one hydrogen production electrolyser 14, at least one electricity production fuel cell 15 and at least one control unit 13, comprising in particular a CPU (Central Processing Unit) and configured to manage and regulate the operation of the at least one electrolyser 14 and of the at least one fuel cell 15.

The electrolyser 14 and the fuel cell 15 are therefore substantially energy production devices that the apparatus 10 is provided with.

The apparatus 10, by means of the control unit 13, is configured to exchange energy with the energy community 11 in a two-way manner, that is, receive energy from the energy community 11 or supply energy to the energy community 11.

In particular, the apparatus 10 can be configured to receive energy when the generators of the energy community 11 produce more energy than that required by the energy community 11 itself, and to supply energy to the energy community 11 when the energy required by the latter is greater than that produced. The exchange of information regarding the surplus or need for energy takes place by means of known communication channels and technologies.

The apparatus 10 is configured, in particular, to assume at least a first stationary condition in which it is connected to the energy community 11 and can therefore exchange energy with it, and at least a mobile condition in which it can be transported by means of a means of transport, and is therefore disconnected from the energy community 11, and can only distribute energy to the at least one user device 12a, 12b.

For this purpose, the apparatus 10 can have shapes and dimensions such that it can be transported by road, for example the shape of a container that can be installed on, or is installed on, a truck.

Fig. 1 schematically shows a first user device 12a, for example a vehicle at least partly powered by hydrogen, and a second user device 12b, for example a vehicle at least partly powered by electrical energy. These user devices 12a or 12b, as well as vehicles, could in general be systems, equipment, devices or other that require the use of hydrogen or electrical energy, respectively.

Downstream of the electrolyser 14, the apparatus 10 comprises one or more hydrogen storage tanks 16. In combination with, or alternatively to, the electrolyser 14, the tanks 16 can receive hydrogen from an external source 25, such as a gas pipeline, external tanks or other.

The apparatus 10 comprises one or more electrical energy storage batteries 17, which can be inserted into corresponding housings 18 so as to be able to carry out so-called "battery swapping", that is, the replacement of a discharged battery with a charged battery. The apparatus 10 can provide further housings 18b used for the insertion of further tanks 17b containing hydrogen, so that, in this case, it is possible to carry out "tank swapping". The tanks 17b could also be re-filled from the external source 25.

The apparatus 10 could be provided with additional energy storage means 24 or devices, such as capacitors or other.

An inverter 19 is provided downstream of the fuel cell 15, so as to be able to supply electrical energy to the apparatus 10 in the appropriate form (voltage, current, frequency) at output.

In this example, therefore, the present apparatus 10 can supply hydrogen gas to the first user device 12a, electrical energy to the second user device 12b, or receive or return energy from/to the energy community 11.

The apparatus 10 is therefore substantially an energy storer which allows to store the electrical energy received from the energy community 11, which provides for the transfer of electrical energy coming from the energy community 11 when it is in the stationary condition, and also to return any available electrical energy to the energy community 11 in case it needs it. The apparatus therefore allows for a two-way exchange of electrical energy with the energy community 11.

The electrolyser 14 is preferably operated when the apparatus 10 is in a stationary configuration, by means of electrical connection to the energy community 11, and produces hydrogen which is stored in the tanks 16.

Each of the tanks 16 can be provided with a first direct outlet to supply the user device 12a and with a second outlet to power the fuel cell 15.

The current generated by the fuel cell 15 powered by hydrogen is sent to the inverter 19, which adapts it for the connection to the normal electrical network, or in any case with voltages, currents and frequencies suitable for the user's needs.

In the stationary operating condition, the control unit 13 manages the functionality for producing hydrogen through the electrolyser 14 and for producing electrical energy through the fuel cell 15, and the energy exchange with the energy community 11, and in particular both the electrical power supply connection between the electrolyser 14 and the energy community 11, and also the exchange of energy between the energy community 11 and the storage batteries 17, which are in particular able to be inserted into and removed from the housings 18.

In the particular case in which - in the stationary condition - the apparatus 10 is connected to the user device 12b, the control unit 13 is configured to establish, by receiving information, whether there is surplus energy or insufficient energy with respect to the energy community 11.

In the first case - surplus energy from the energy community 11 - the control unit 13 manages the supply to the user device 12b so that the electrical energy passes directly from the energy community 11 to the user device 12b, and also operates the electrolyser 14 and the batteries 17 at an overall consumption such as to maximize the surplus from the energy community 11. The batteries 17 are preferably charged directly from the energy community 11.

In the second case - shortage of, demand for or insufficient energy from the energy community 11 - the control unit 13 activates the fuel cell 15 which generates energy to supply the user device 12b. The control unit 13 can simultaneously return electrical energy to the energy community 11.

In the event that the energy community 11 requires energy, the control unit 13 activates the fuel cell 15 which generates energy to return it to the energy community 11 itself.

The hydrogen gas produced by the electrolyser 14 can also be delivered directly to the user device 12a without being reconverted into electrical energy. The hydrogen can be used to recharge the "swappable" type tanks 17b.

In the apparatus' 10 mobile condition, the control unit 13 manages at least the refueling or supply functionality, whether it relates to hydrogen or electrical energy.

The batteries 17 and the tanks 17b can be extracted from the apparatus 10 already charged, for a quick insertion into the user devices 12b and 12a.

When the apparatus 10 is stationary and the user device 12b is connected, the energy from the energy community 11, if available, is delivered directly to the user device 12b, and the same energy possibly powers the electrolyser 14 in order to charge the tanks 16. If there is no connected user device 12b, the energy is used only to serve the electrolyser 14.

Conversely, if there is no surplus energy from the energy community 11 and there is a connected user device 12b that requires electrical energy, or the energy community 11 requires energy, or it is necessary to recharge the batteries 17, the fuel cell 15 is activated, generating energy and delivering it to the requesting component.

The apparatus 10 can also comprise absorber devices 21, that is, thermal energy converters suitable to absorb and convert the heat generated during the operation of the fuel cell 15 and/or the electrolyser 14, in order to carry out a recovery of the thermal energy that would otherwise be dissipated in the surrounding environment. The thermal energy recovered, at least in a stationary condition of the apparatus 10, can be used within a cooling or heat exchange circuit, for example to heat/cool environments, even belonging to the energy community 11. In this case, the apparatus 10 can comprise a hydraulic and/or pneumatic connection circuit 22 configured to connect the absorber devices 21 to special external circuits.

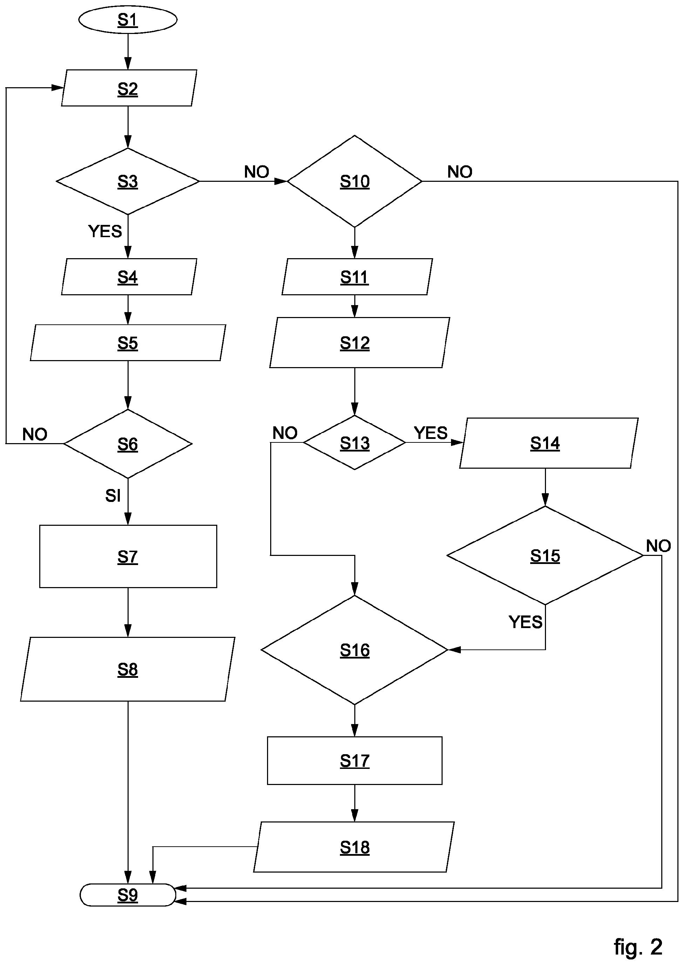

A mode of operation of the present apparatus 10, managed by the control unit 13, is described in detail below and with reference to fig. 2.

Block S1 represents the beginning of the process of operation of the apparatus 10. In block S2, the energy demand status, for example by the energy community 11, is read. In decision block S3, it is determined if there is an energy demand. If so, the process passes to block S4, in which the energy demanded by the user device 12b is read. The control unit 13 determines the total amount of energy required, to be produced by the apparatus 10. This energy is equal to the sum of the energy demanded by the energy community 11 and by the user device 12b, block S5.

It is then established whether the tanks 16 have sufficient hydrogen, block S6. If sufficient energy can be obtained from the tanks 16 to meet the overall demand, there is a block S7 in which it is possible to establish, on the basis of known efficiency curves, which is the best point or device to extract the required energy, therefore for example the tanks 16, or any other means 24 such as accumulators, capacitors or other, provided in the apparatus 10.

If sufficient energy cannot be obtained from the tanks 16 and/or at that time in order to meet the overall demand, the process returns to block S2.

By `characteristic or efficiency curves' we mean numerical data or schematic graphs that show the trend of the operation of a given device, for example in terms of maximum output power, efficiency, or other, as a function of time, state of wear, temperature, or environmental conditions in general, or the electric power at which the device operates.

The efficiency curves can reside in a memory 20 associated with the control unit 13. The memory 20 can also be located on a server, remote from the control unit 13, which will be equipped with suitable communication devices for communicating with the server.

The apparatus 10 can comprise sensor devices 23 configured to detect atmospheric conditions, comprising one or more of either a temperature sensor, an atmospheric humidity sensor, an atmospheric pressure sensor, a temperature and/or humidity sensor.

The control unit 13 can therefore be configured to receive the data from the sensor devices 23, process it and compare it with the stored efficiency curves and determine if and how to operate one or more devices chosen from the electrolyser 14, fuel cell 15, tanks 16, batteries or any other means 24 such as accumulators, capacitors or other, in order to make them work in the operating ranges that, based on the characteristic curves, allow to achieve a greater efficiency so as to be able to store as much energy as possible.

The process then moves on to block S8, in which energy is produced in order to meet the overall demand. For example, it can be assumed that in a given environmental condition and based on the efficiency curves, the best choice is to start-up the fuel cell 15, exploit the batteries 17 or any other means 24 such as accumulators, capacitors or other. When all the total energy required has been obtained, the process ends, block S9.

Returning to block S3, if there is no demand for energy, for example from the energy community 11, the process proceeds to block S 10, in which it is established whether there is surplus energy, for example from the energy community 11, or if there is an active energy request mode, for example from one of the user devices 12a, 12b.

If there is, in block S11 the need to recharge the hydrogen tanks 16, batteries 17 and tanks 17b, or other, is read, in order to power, for example, the user devices 12a, 12b. The energy consumed is equal to the minimum between the sum of energy consumed by the user devices 12b, the energy absorbed by the electrolyser 14, the batteries 17 and the means 24, and the surplus energy, block S12.

In block S13, the control unit 13 establishes whether there is a request for energy by the user device 12b connected to the apparatus 10.

If there is, the process proceeds to block S14, in which energy passes to the user device 12b directly from the energy community.

In block S15, the control unit 13 establishes whether there is additional energy available in excess after the consumption of the user device 12b.

If there is not, the process has ended, block S9. If there is, and if the user device 12b demand is not greater than zero, the process proceeds to block S16.

The additional surplus energy minus the energy that has been consumed in a previous consumption operation of the user device 12b previously connected to the apparatus 10, is used to produce hydrogen by means of the electrolyser 14 and to charge the tanks 16, 17b, the batteries 17 and the means 24, block S17, again using the efficiency curves in order to establish, for example, the best moment to start-up the electrolyser 14.

In block S18 therefore, based on the efficiency curves, the control unit 13 commands the start-up of the electrolyser 14 to produce hydrogen that will fill the tanks 16 and 17b.

Possibly, the hydrogen produced can also be used to power the fuel cell 15 for the production of electrical energy.

It is clear that modifications and/or additions of parts or steps may be made to the apparatus and method for distributing and storing energy as described heretofore, without thereby departing from the field and scope of the present invention, as defined by the claims.

It is also clear that, although the present invention has been described with reference to some specific examples, a person of skill in the art will be able to achieve other equivalent forms of method for distributing and storing energy, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Apparatus (10) for distributing and storing energy, configured to be connected on one side to a renewable sources energy community (11) comprising a plurality of electrical energy generators, and on the other side to at least one user device (12a, 12b), **characterized in that** it comprises at least one electrolyser (14) for hydrogen production and at least one fuel cell (15), where the operation of both is managed and regulated by at least one control unit (13) which allows said apparatus (10) to be configured to exchange energy with said energy community (11) in a two-way manner, that is, receiving energy from said energy community (11) or supplying energy to said energy community (11), wherein said apparatus (10) is configured to assume, by means of said control unit (13), at least a first stationary condition in which it is connected to the energy community (11) and therefore exchanges energy with it, and at least a mobile condition in which it can be transported and is therefore disconnected from the energy community (11) and can distribute energy to one or more user devices (12a, 12b), and wherein said apparatus (10) is configured to receive energy when the generators of the energy community (11) produce more energy than that required by the energy community (11) itself, and to supply energy to the energy community (11) when the energy required by the latter is greater than that produced.

2. Apparatus (10) as in claim 1, **characterized in that** it comprises one or more hydrogen storage tanks (16, 17b) able to be inserted into corresponding housings (18b).

3. Apparatus (10) as in claim 2, **characterized in that** said tanks (16, 17b) are configured to receive hydrogen from an external source (25), such as a gas pipeline, external tanks or other.

4. Apparatus (10) as in claim 2 or 3, **characterized in that** said one or more tanks (16) are provided with a first direct outlet to supply the user device (12a) and a second outlet to power the fuel cell (15).

5. Apparatus (10) as in any claim hereinbefore, **characterized in that** it comprises one or more electrical energy storage batteries (17) able to be inserted into corresponding housings (18), so as to be able to carry out so-called "battery swapping".

6. Apparatus (10) as in any claim hereinbefore, **characterized in that** it comprises additional energy storage means (24) or devices, such as capacitors or other.

7. Apparatus (10) as in any claim hereinbefore, **characterized in that** it comprises at least one inverter (19) located downstream of said at least one fuel cell (15).

8. Apparatus (10) as in any claim hereinbefore, **characterized in that** said control unit (13) is associated with at least one memory (20) where one or more efficiency curves for said at least one electrolyser (14), said at least one fuel cell (15) or other, are stored.

9. Apparatus (10) as in claim 2, **characterized in that** said one or more tanks (16) are configured to directly feed said at least one user device (12a) and/or said fuel cell (15).

10. Apparatus (10) as in any claim hereinbefore, **characterized in that** it comprises absorber devices (21) configured to absorb and convert the thermal energy generated during the operation of said electrolyser (14) and said fuel cell (15).

11. Method for distributing and storing energy, **characterized in that** it provides: the production of hydrogen by means of at least one electrolyser (14) and the production of electrical energy by means of at least one fuel cell (15), wherein said at least one electrolyser (14) and said at least one fuel cell (15) are disposed in an apparatus (10) for storing and distributing energy provided with a control unit (13) configured to manage and regulate the operation of said apparatus (10); the delivery of said hydrogen and/or said electrical energy to at least one user device (12a, 12b); and the connection with a renewable sources energy community (11), so as to receive energy from said energy community (11) or supply energy to said energy community (11), said apparatus (10) being configured, by means of said control unit (13), to assume at least a first stationary condition in which it is connected to the energy community (11) and therefore exchanges energy with it, and at least a mobile condition in which it can be transported and is therefore disconnected from the energy community (11) and can distribute energy to one or more user devices (12a, 12b), and wherein said apparatus (10) is configured to receive energy when the generators of the energy community (11) produce more energy than that required by the energy community (11) itself, and to supply energy to the energy community (11) when the energy required by the latter is greater than that produced.

12. Method as in claim 11, **characterized in that** in the event that, in a stationary condition, said apparatus (10) is connected to said at least one user device (12a, 12b), said at least one control unit (13) is configured to establish whether surplus energy or insufficient energy is available with respect to said energy community (11): in case of surplus energy, said at least one control unit (13) manages said at least one user device (12a, 12b) so that the electrical energy passes directly from the energy community (11) to said at least one user device (12a, 12b); in case of insufficient energy, said at least one control unit (13) activates the fuel cell (15) which generates electrical energy to be used by said at least one user device (12a, 12b) and possibly to supply said energy community (11).

13. Method as in claim 11 or 12, **characterized in that** it provides to send the hydrogen produced by said electrolyser (14) into one or more tanks (16) from which it can be transferred directly to said at least one user device (12a, 12b) to be recharged and/or to said fuel cell (15).
